# EUROPEAN PATENT SPECIFICATION

(11) **EP 3 648 453 B1**
(45) Date of publication and mention of the grant of the patent: **08.12.2021**
(21) Application number: 18461621.7
(22) Date of filing: 31.10.2018
(51) Int. Cl.: H04N 5/369, H04N 5/225

(54) **SYSTEM FOR DETECTION WITH HIGH TEMPORAL AND SPATIAL RESOLUTION AND METHOD FOR DETECTION WITH HIGH TEMPORAL AND SPATIAL RESOLUTION**
SYSTEM ZUR DETEKTION MIT HOHER ZEITLICHER UND RÄUMLICHER AUFLÖSUNG UND VERFAHREN ZUR DETEKTION MIT HOHER ZEITLICHER UND RÄUMLICHER AUFLÖSUNG
SYSTÈME DE DÉTECTION À HAUTE RÉSOLUTION TEMPORELLE ET SPATIALE ET PROCÉDÉ DE DÉTECTION À HAUTE RÉSOLUTION TEMPORELLE ET SPATIALE

(43) Date of publication of application: 06.05.2020
(73) Proprietor: Uniwersytet Warszawski, 00-927 Warszawa (PL)
(72) Inventor: Lapkiewicz, Radoslaw, 87-100 Torun (PL); Szuniewicz, Jerzy, 61-693 Poznan (PL); Firlik, Grzegorz, 45-314 Opole (PL); Wasilewski, Wojciech, 02-130 Warszawa (PL); Zwolinski, Wojciech, 27-400 Ostrowiec Swietokrzyski (PL); Wegrzyn, Piotr, 04-879 Warszawa (PL); Krupinski-Ptaszek, Aleksander, 84-442 Bydgoszcz (PL)
(74) Representative: AOMB Polska Sp. z.o.o.

(56) References cited:
- EP-A2- 0 166 567
- WO-A2-95/25418
- US-B1- 6 180 946

## Description

### Field of the invention

The present invention relates to a system for detection with high temporal and spatial resolution and a method for detection with high temporal and spatial resolution. The invention finds application in systems for high-speed image sampling and in the method for high-speed image sampling, in particular is designed for production of cameras with high sensitivity and enhanced temporal and spatial resolution, capable of high-speed single photon counting.

### Background of the invention

Systems for detection with high temporal and spatial resolution, utilising in their structures SPAD Array *(Single Photon Avalanche Diode Arrays)* type detectors, are known in the prior art. Nonetheless, they are characterised by a low fill factor of the image sensor [G. Intermite and R. E. Warburton et al., "Enhancing the fill-factor of CMOS SPAD arrays using microlens integration", Proc. SPIE 9504, Photon Counting Applications, 2015, 95040J (May 6, 2015); DOI: 10.1117/12.2178950].

A H33D type detector, wherein a photocathode and a microchannel plate are used for single photon signal enhancement, is also known in the prior art [X. Michalet et al., Nuclear Instruments and Methods in Physics Research A, 2006, 567, 133-136]. The electron cloud obtained from the microchannel plate is collected by a DLD type detector *(*Delay Line Detector or Delay Line Anodes) [J. V. Vallerga and J. B. McPhate, "Optimization of the readout electronics for microchannel plate delay line anodes" DOI: 10.1117/12.410543; O. Siegmund, J. Vallerga, P. Jelinsky, X. Michalet, S. Weiss, "Cross Delay Line Detectors for High Time Resolution Astronomical Polarimetry and Biological Fluorescence Imaging", Nuclear Science Symposium Conference Record, 2005, IEEE, DOI: 10.1109/NSSMIC.2005.1596290].

Attempts aiming at spatially resolved multiphoton counting based on a camera with an image intensifier and the photon counting statistics resulting from a non-linear detection process are disclosed in the prior art. The result presented in [R. Chrapkiewicz, W. Wasilewski, and K. Banaszek, "High-fidelity spatially resolved multiphoton counting for quantum imaging applications", Opt. Lett., 2014, 39, 5090-5093] is much better than previous approaches to characterize quantum statistical properties of light with spatial resolution.

At present, the single photon detection technique uses highly sensitive detectors or cameras with image intensifiers. [A. G. Basden, C. A. Haniff and C. D. Mackay, "Photon counting strategies with low-light-level CCDs", Mon. Not. R. Astron. Soc., 2003, 345, 985-991].

A general detection process with image intensification can be depicted as follows: an incident photon ejects an electron from the photocathode that subsequently is converted into an electron cloud. The detection of such a cloud is technically significantly easier than the detection of a single particle - in particular a photon. To utilize the camera as a detector, the emerging electron cloud is subsequently converted into a stream of photons which are detected in the camera.

In the present state of the art the following detectors are used for the single photon counting: (a) TES [US5880468]; (b) SPAD / SPAD Array [US8405020B]; (c) SNSPD; (d) H33D; (e) PMT; (f) silicon photomultipliers; for this purpose, the following technologically advanced cameras can also be used: (a) EMCCD - [US2009140157A; US2007153103A; DE102010037406A], and (b) sCMOS [US2016104691A; CN103179331A] with an image intensifier.

Devices utilising image intensifiers are known in the area of ultra-high-speed cameras - for example those reported in the paper http://spie.org/Publications/Proceedings/Paper/10.1117/12.273465, Stanford Computer Optics XXRapidFrame camera (https://stanfordcomputeroptics.com/products/iccd-framing-camera.html), hsfc pro camera manufactured by pco (https://www.pco.de/intensified-cameras/hsfc-pro/) or PicoQuant LINCam camera (https://www.picoquant.com/images/uploads/downloads/lincamdatasheet_new.pdf). Even if more than one image detector is used in such a camera - then it is just for recording images in different spectral regions and no attempt is made to correlate spatial and temporal observations.

Also known are numerous systems comprising two or more image detectors, dedicated for specific applications, for example in fluorescence microscopy. In such systems - for example those disclosed in DE102010035003B4, US20180113292A1, US20130126755A1 - the observed sample is excited with a pulsed laser at predetermined or preset time moments. In such systems, the sample is observed after the system excitation. Therefore, in these systems the problem of spatial and temporal correlations of conducted observations does not occur. The optical systems disclosed in these publications do not have image intensifiers. Such systems are not suitable for conducting observations where light, even as weak as single photons, can come at any moment (unknown in advance).

In US 6180946 B1 a radiation camera with high spatial, temporal, and energy resolution is disclosed. An imaging ionizing radiation detector with a high pixel resolution is described. The detector comprises a scintillating crystal and associated sensors which determine the energy and position of the scintillation with high spatial, temporal, and energy resolution. The position sensing is done with a photon counting and position sensitive detector.

### Spatial resolution

In the state of the art, devices that enable the spatially resolved detection of single photons are cameras, SPAD arrays and superconducting nanowire single-photon detectors (SNSPDs). These solutions are, however, not without drawbacks. Recording with a camera is limited by the frame readout speed. SPAD arrays have a low fill factor of the image sensor array as compared with cameras, which imposes serious limitations on the system's detection capability. SNSPDs provide low resolution in terms of number of pixels compared to cameras.

### Temporal resolution

It is known from the prior art that PMT, TES, SPAD, SNSPD type detectors offer much more favourable parameters for high temporal resolution recording as compared with cameras. The most recent technology advancement is a TimePixCam type camera [DOI: 10.1088/1748-0221/11/03/C03016].

The present inventors are not aware of any systems with image intensifier, comprising at least two light detectors ― i.e. a high spatial resolution detector and a high temporal resolution detector―wherein matching (correlation) of the signal from the high spatial resolution detector and the signal from the high temporal resolution detector would be performed based on the intensity of these signals.

### Time gating of light signal

In addition, the present inventors are not aware of any systems with an image intensifier, wherein a high temporal resolution detector, a high spatial resolution detector, and an image intensifier are connected to an electronics executing an adaptive time gating algorithm, allowing for detection of events (photons) on the high spatial resolution detector in a time interval, in which the high temporal resolution detector records a preset number of events, or in a series of consecutive, preset time intervals, in which the high temporal resolution detector records in total a preset number of events.

### Problems in the prior art

The imaging with high resolution, both temporal and spatial, is an important issue in state-of-the-art medicine, astronomy, biology, microscopy, basic research (in particular that related to spatial and temporal correlations), and in military technologies. Today, we have effective detectors that provide detailed information about the photon's arrival time (such a detector is for example a photomultiplier). On the other hand, the technology of cameras for photon detection with spatial resolution is highly developed, for example in sCMOS array cameras. Both properties are combined in, for example, an I-sCMOS camera - a combination of a sCMOS camera with an image intensifier. The image intensifier can be gated (opened for a specified, very short period of time) to restrict the photon detection to a very short period of time. It is then possible to detect simultaneously incident photons with spatial resolution. Unfortunately, the frame collection rate with this method is very low due to technical limitations of the camera. According to current knowledge, there are no cameras available to record single photons with high spatial resolution while maintaining a high event collection rate and the temporal resolution. The event collection rate is extremely important, as it allows for collection of statistically significant results over a short span of time and for performing many measurements. Temporal resolution is necessary for observing processes rapidly changing over time.

Another problem occurring in the prior art is the need to detect, with a high spatial resolution detector, frames containing preset numbers of events.

### Solution of problems

Both problems indicated above are solved in a system according to the present invention due to the fact that it comprises an image intensifier and a high temporal resolution detector and a high spatial resolution detector. The detectors are placed in the optical path of the light signal behind the image intensifier, wherein both detectors and optionally the image intensifier are connected by electronics executing the analysing and/or controlling algorithm proposed in the present invention.

The solution to the problem according to the invention disclosed herein consists in increasing the temporal resolution of the high spatial resolution detector (or equivalently, increasing the spatial resolution of the high temporal resolution detector). The light signal is recorded on at least two detectors: one with a high spatial resolution and the other offering a high temporal resolution. The invention solves the problem of recognizing and combining the signals from both detectors by an algorithm that uses signal amplitudes. Unexpectedly, the solution according to the invention allows achieving simultaneously both high temporal and high spatial resolutions.

The light signal can be simultaneously recorded on at least two detectors placed in a solid angle into which the image intensifier emits light. It is also possible to place a beam splitter behind the image intensifier and at least two detectors at the beam splitter outputs, and/or utilize auxiliary optics.

The analysing algorithm used to correlate signals recorded on the two detectors is based on the fact that the strongest signal on one detector is also the strongest signal on the second detector. The signals recorded on both detectors are sorted, possibly after performing arbitrary transforms on them. The strongest signal from one detector is then correlated with the strongest signal from the other detector and further in descending order.

According to the invention, irrespective of the above described possibility to analyse the correlation of signals recorded on the two mentioned detectors or together with it, the electronics may also be connected to an image intensifier and may execute the algorithm controlling the image intensifier. Specifically, an adaptive time gating algorithm is proposed, consisting in opening the image intensifier simultaneously with the start of recording of the light signal on the high temporal resolution detector and the high spatial resolution detector, counting events on the high temporal resolution detector, and after a preset number of events is counted - closing the image intensifier. In a variant of this solution, the image intensifier opens for a predetermined time, shorter than the time of exposure of the high spatial resolution detector's frame, after which the image intensifier closes. If the number of events recorded by the high temporal resolution detector during the opening time of the image intensifier does not exceed the preset number of events, the electronics opens the image intensifier, in pulsed mode, for successive short time intervals and works analogously until the preset total number of events is reached.

### Disclosure of the invention

A system for detection with high temporal and spatial resolution, according to the invention, is characterised in that it comprises an image intensifier, at least one high spatial resolution detector, at least one high temporal resolution detector, and electronics executing an algorithm, connected to these detectors and possibly connected to the image intensifier, arranged and setup so that an optical signal amplified on the image intensifier is subsequently recorded on the at least one high spatial resolution detector and on the at least one high temporal resolution detector.

The electronics executing the algorithm is connected to the image intensifier, and is setup and programmed either to control the image intensifier in such a way that it opens the image intensifier simultaneously with the start of recording of the light signal on the at least one high temporal resolution detector and on the at least one high spatial resolution detector, counts events on the at least one high temporal resolution detector, and after a preset number of events is counted - closes the image intensifier, or to control the image intensifier in such a way that it opens the image intensifier for a predetermined time, shorter than the frame exposure time of the at least one high spatial resolution detector, counts events on the at least one high temporal resolution detector, then closes the image intensifier, and if the number of counted events during the opening time of the image intensifier does not exceed the preset number of events - the electronics opens and closes the image intensifier for successive time intervals in pulsed mode, shorter than the frame exposure time of the at least one high spatial resolution detector and counts the events on the at least one high temporal resolution detector in these time intervals, until the preset total number of events is reached.

Irrespective of the above mentioned possibilities to control the image intensifier or together with them, the electronics executing the algorithm may be setup and programmed to perform correlation of the signal from the at least one high spatial resolution detector and the signal from the at least one high temporal resolution detector based on an intensity function of these signals, in particular their amplitude and/or integral and/or FWHM and/or total energy and/or number of photons, preferably the electronics executing the algorithm is setup and programmed to perform correlation of the strongest signal from the at least one high spatial resolution detector with the strongest signal from the at least one high temporal resolution detector, and possibly also to sort signals from the at least one high spatial resolution detector and the at least one high temporal resolution detector in line with increasing or decreasing value of the intensity function of these signals.

Preferably, the at least one high spatial resolution detector and the at least one high temporal resolution detector are placed in the solid angle, into which the image intensifier emits light.

Preferably, the at least one high spatial resolution detector is provided behind the beam splitter, on one of its outputs, whereas the at least one high temporal resolution detector is provided on another output of the beam splitter.

Preferably, the system according to the invention comprises at least one auxiliary optics.

Preferably, the auxiliary optics is provided between the beam splitter and the image intensifier and/or between the beam splitter and the at least one high spatial resolution detector and/or between the beam splitter and the at least one high temporal resolution detector.

The invention also includes a method for detection with high temporal and spatial resolution, characterised in that the optical signal is amplified on an image intensifier, and subsequently is recorded on at least one high spatial resolution detector and on at least one high temporal resolution detector.

Preferably, with the electronics executing the algorithm, connected to the image intensifier, time gating of the image intensifier is performed by opening the image intensifier simultaneously with the start of recording of the light signal on the at least one high temporal resolution detector and on the at least one high spatial resolution detector, counting events on the at least one high temporal resolution detector, and after a preset number of events is reached - closing the image intensifier.

Preferably, with the electronics executing the algorithm, connected to the image intensifier, pulsed time gating of the image intensifier is performed by opening the image intensifier for a predetermined time, preferably shorter than the frame exposure time of the at least one high spatial resolution detector, counting events on the at least one high temporal resolution detector, then closing the image intensifier, and if the number of counted events during the opening time of the image intensifier does not exceed the preset number of events - the image intensifier is opened and closed in pulsed mode for successive time intervals, shorter than the frame exposure time of the at least one high spatial resolution detector and the events are counted on the at least one high temporal resolution detector in these time intervals, until the preset total number of events is reached.

Irrespective of the above mentioned possibilities to control the image intensifier or together with them, the electronics may execute the algorithm correlating the signal from the at least one high spatial resolution detector with the signal from the at least one high temporal resolution detector based on an intensity function of these signals, in particular their amplitude and/or integral and/or FWHM and/or total energy and/or number of photons, whereas preferably the strongest signal from the at least one high spatial resolution detector is correlated with the strongest signal from the at least one high temporal resolution detector, and possibly also signals from the at least one high spatial resolution detector and the at least one high temporal resolution detector are sorted in line with increasing or decreasing value of the intensity function of these signals.

Preferably, the optical signal amplified on the image intensifier is imaged with the auxiliary optics and/or split with a beam splitter, and subsequently recorded on the at least one high spatial resolution detector and on the at least one high temporal resolution detector.

Preferably, the image intensifier and/or the at least one high spatial resolution detector and/or the at least one high temporal resolution detector are time gated and the gain of the image intensifier optionally varies in time.

In the optimum embodiment variant, the method according to the present invention is implemented in a system according to the present invention.

The present invention has numerous advantages including utilisation of well-known and widespread technologies. The invention has also a much better temporal and spatial resolution as compared with solutions currently available on the market. The invention has a much better fill factor of the image sensor array. The design of the invention is modular and can be adapted to many solutions currently available on the market. The invention can be used in the existing systems as their extension.

Possibly insufficient efficiency of correlation can be improved by applying image intensifier gain modulation in order to provide higher dynamic range and a more favourable signal amplitude distribution.

In turn, by controlling the image intensifier according to the adaptive time gating algorithm proposed in the present invention, it is possible to cause all frames recorded on the at least one high spatial resolution detector to contain a preset number of events. Elimination of frames with the number of events different than requested (e.g., empty frames) allows for significant shortening of time needed to carry out experiments and for data volume reduction.

One of the many possible areas of application of the invention is, inter alia, medical, biological imaging, microscopy, astronomy, military applications, detectors for space missions, detection of particles (high energy physics).

### Glossary and definitions of terms used in the patent specification

Terms used herein have the meanings given below. Terms not defined herein have meanings which are given and understood by a person skilled in the art, to the best of his/her knowledge, this disclosure and the context of the description of patent application. The terms are given in alphabetical order.

"Beam splitter" - a device used for splitting a light signal. For instance, a 50:50 plate or cube beam splitter reflects half of the light beam and transmits the other half. Other examples of beam splitters: optical coupler, polarizing plate beam splitter, polarizing cube beam splitter, birefringent crystal (beam displacer).

"CCD" - (*Charge Coupled Device*) - a system of light sensitive semiconductor elements allowing for reading out the recorded image row by row. Arrays produced in this technology have a high fill factor of the image sensor. At present, the technology is used in production of compact photo cameras.

"CMOS" - (*Complementary Metal Oxide Semiconductor*) ― a technology used for production of sensors for cameras. An array comprises light sensitive elements, amplifiers and analog-to-digital converters. The arrays produced in this technology are characterised by low power consumption, low interference level and enable high-speed readout of the recorded signal.

"EMCCD" - (*Electron Multiplying Charge Coupled Device*) an electron multiplying charge coupled device used in production of laboratory cameras, which are capable of detecting single photons while simultaneously preserving high quantum efficiency.

"Event" - herein an event means the detection of photon at the input of an image intensifier accompanied by a bright flash of light at the output of the image intensifier.

"Fill factor" - the ratio of the surface area of the light sensitive pixels to the total surface area of the detector.

"Gating" - herein enabling the operation of an image intensifier or a detector for a period of time.

"Image intensifier" ― a device for increasing the brightness of low-light images.

"MCP" - (*Microchannel Plate*) a device consisting of many identical channels, each of which can be used to increase the number of electrons by multiplying them as a result of the secondary emission while maintaining spatial resolution. It is often used as a particle detector.

"PMT" - (*Photomultiplier Tube*) ― a type of vacuum lamp, a light detector which can be characterized by high temporal resolution. Just as the photodiode, it includes a photocathode and an anode.

"sCMOS" - (*Scientific Complementary Metal Oxide Semiconductor*) - a more advanced and developed technology of CMOS cameras. The device is widely used in the world of science.

"Signal amplitude" - a physical quantity proportional to the number of photons in the flash recorded on the detector. For example, it can be the flash energy on a single camera frame or the charge recorded by a photomultiplier during a single flash.

"SNSPD" - (*Superconducting Nanowire Single-Photon Detector*) a single photon detector based on superconducting nanowires. The principle of the detector operation is based on a change in electrical conductivity of a superconducting nanowire triggered by photon absorption.

"SPAD" - (*Single Photon Avalanche Diode*) - an avalanche diode for detection of single photons - a type of photodiode, a semiconductor element based on a reverse biased p-n junction. Photon arrival results in generation of an electron-hole pair that is split apart and multiplied due to applied high voltage. It results in amplification of the initial photocurrent from a few to a few million times.

"Temporal and spatial resolution" - the capability of event recording in time (moment of recording) and space (position on the detector array).

"TES" - (*Transition Edge Sensor*) a type of a particle detector that exploits in its structure a strongly temperature-dependent resistance in superconducting phase transitions.

### Brief description of figures

The present invention is presented in the figures, wherein:

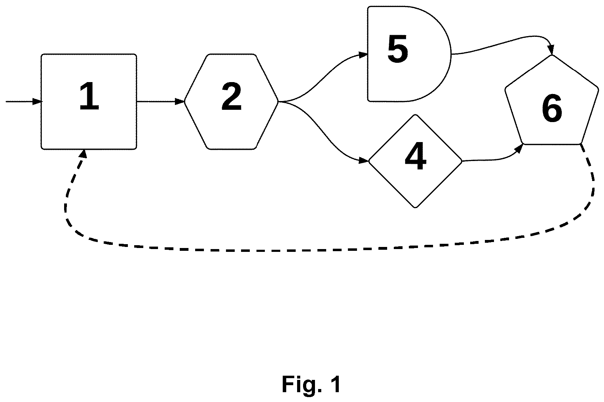

Fig. 1 shows an exemplary system according to the invention, wherein two detectors are placed behind the image intensifier - one with high temporal resolution and the other with high spatial resolution.
Fig. 2 shows an exemplary system according to the invention, wherein behind the image intensifier there is a beam splitter with two detectors placed at its outputs: one with high temporal resolution and the other with high spatial resolution.
Fig. 3 shows a typical experimental result obtained with a detection system described in Example 1 and the electronics executing the algorithm of correlating signals recorded on the high temporal resolution detector and the high spatial resolution detector, as described in Example 2.
Fig. 4 shows adaptive time gating timings as described in Example 4.
Fig. 5 shows pulsed adaptive time gating timings as described in Example 5.

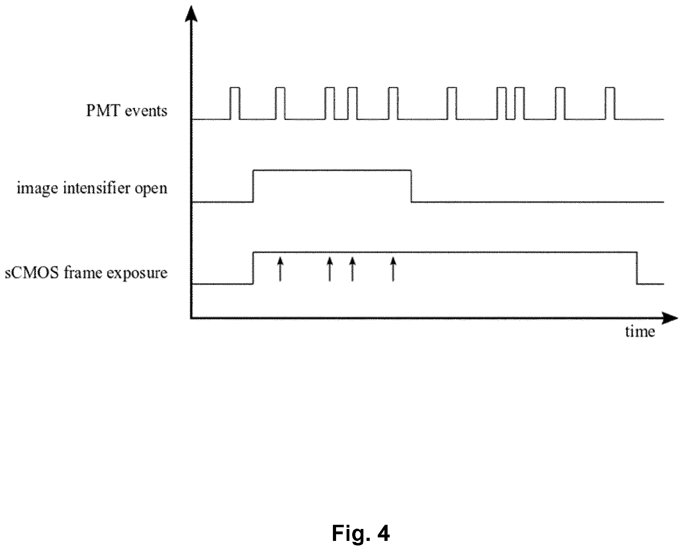

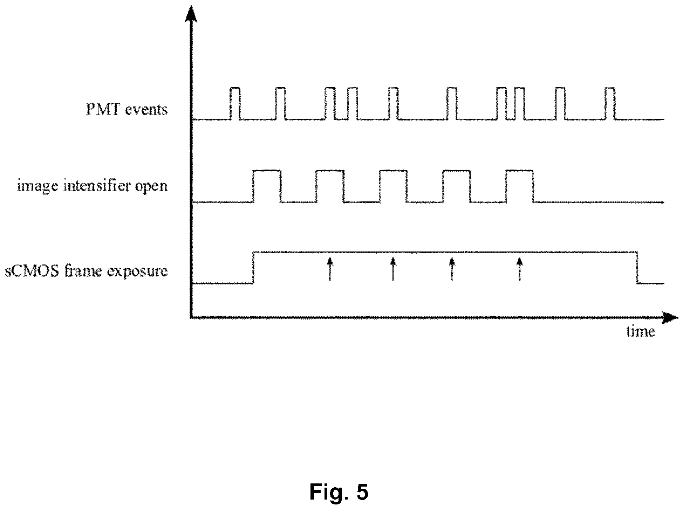

The following labelling is used in the figures: 1 - image intensifier; 2 - auxiliary optics; 3 - beam splitter; 4 - high spatial resolution detector; 5 - high temporal resolution detector; 6 - electronics executing the algorithm. Arrows in figures 4 and 5 denote events registered on a sCMOS frame.

### Detailed description of the invention

The following examples are given only to illustrate the invention and to explain its particular aspects, without detriment to the scope of the invention as defined in the appended claims. In the following examples, unless otherwise indicated, standard materials and methods known in the art were used or the recommendations of manufacturers of specific devices and suppliers of specific methods were followed.

### Example 1 - Optical system comprising two cameras with different characteristics

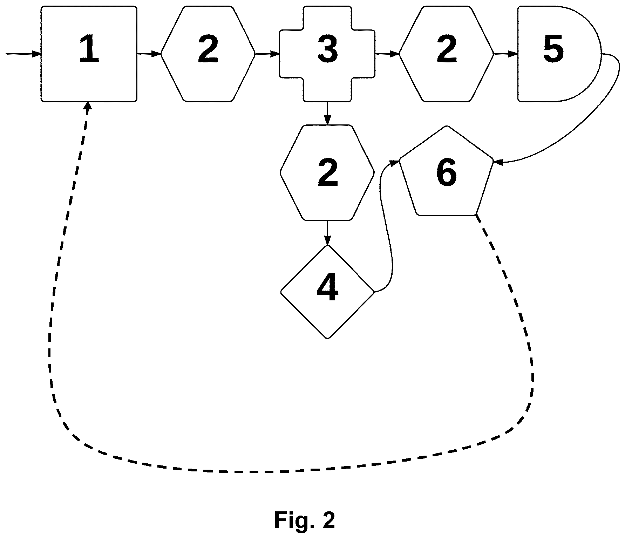

An exemplary system according to the present invention (Fig. 2) was constructed using two cameras. The first camera (sCMOS type - Andor Zyla), used as a high temporal resolution detector (5), was placed in the axis of the image intensifier (1) (Hamamatsu, model: V7090D-71-G232, P43 type phosphor). At 90° angle, a second camera (EMCCD type - iXon Ultra) was used as a high spatial resolution detector (4). The image intensifier (1) was comprised of the following components: a photocathode (made of gallium arsenide), a microchannel plate and a phosphor screen. A 50:50 plate beam splitter (ThorLabs) (3) was placed behind the image intensifier (1). The amplified light signal, divided in such a way, was recorded with two cameras (4), (5). For effective imaging, a lens system was used as the auxiliary optics (2).

If cameras are used (as spatial detectors (4)), it is preferable that the auxiliary optics (2) images the output of the image intensifier (1) on the array of the camera (4).

In the case of detectors recording with temporal resolution (5), the auxiliary optics (2) is intended to increase the detection efficiency. This can be achieved with focusing optics or with imaging optics with magnification adapted to the dimensions of the array (reduction is usually required). Again, we image the output of the image intensifier (1) on the photosensitive area of the detector (5).

The light available for detection is emitted into half of the solid angle (2π), which means that it is not necessary to place any beam splitter, as both detectors (4), (5) can be placed in such a way that they record the emitted light (optical signal).

### Example 2- Optical system using photomultiplier and sCMOS camera

Imaging lens (2) (Canon USM f1.0 50mm lens) is present behind the image intensifier (Hamamatsu, model: V7090D-71-G272, with fast decay P47 type phosphor) (1) at a distance equal to focal length of the lens from phosphorous screen in order to create infinity path behind the lens, where we put a 90:10 beam splitter (3). The light signal was in part reflected off the plate (3), and in part transmitted. The reflected light was guided onto an imaging lens and further onto the Hamamatsu R1924A photomultiplier tube (5). Light transmitted through the plate (3) was guided onto the imaging lens (Canon f0.95 50mm CCTV lens) and the the Andor Zyla sCMOS camera (4). The photomultiplier (5) and camera (4) were connected to the electronics (6) executing the algorithm of signal amplitude correlation.

The solution according to the invention consists in combining the advantages of two (or many) detectors. It is important to detect individual photons, so first an image intensifier (1) is placed, which multiplies the number of photons (from one to about a million). Due to stochastic nature of the electron multiplication process inside the microchannel plate, the image intensifier (1) shows different gain levels, depending on the event. This translates into the brightness of observed events. Due to its structure, the image intensifier (1) maintains the information about positions of incoming photons, and because of a low jitter and gating, it maintains the information about the time of each event. At the output of the image intensifier (1) there are enough photons to be recorded by low sensitivity detectors.

### Example 3 - Results obtained with the system described in Example 1 with the electronics executing the algorithm of signal amplitude correlation as in Example 2.

The frame of the iXon Ultra camera, used in the embodiment as a high spatial resolution detector (4), was exposed for 1 s. During this time period, 10 frames were recorded on the Andor Zyla camera (used as a high temporal resolution detector (5)). The signal triggering the camera (5) triggered also the image intensifier (1), so that the image intensifier (1) remained open for the time period, when the entire array of the Andor Zyla camera was exposed.

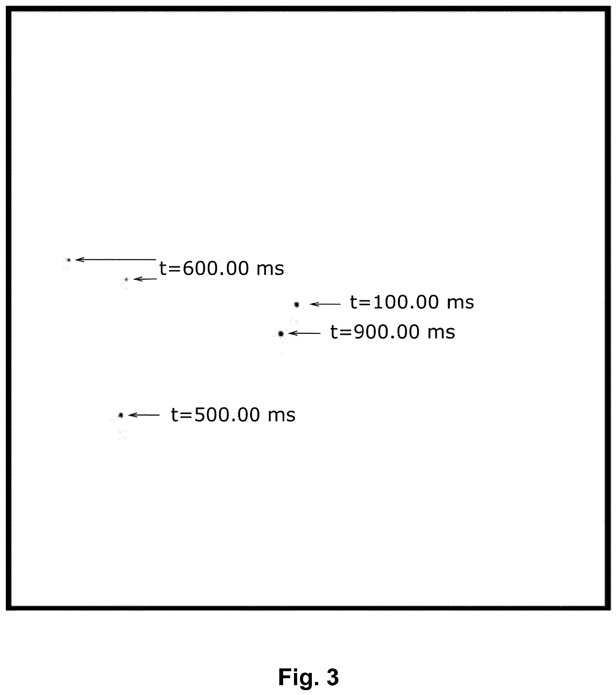

The image intensifier (1) was opened for 30 ns, in 100 ms intervals. This enabled locating the events in time with an estimated accuracy of 30 ns. The examples are shown in Fig. 3 and Table 1. The image shown in Fig. 3 is a real graphics of a recorded frame from the iXon Ultra camera with marked times of event recording. The presented information was obtained as a result of execution of the algorithm correlating the amplitudes of signals from the iXon Ultra camera and from the Andor Zyla camera.

**Table 1. Data from the algorithm executed on two detectors**

| Signal amplitude - iXon detector [a.u.] | X coordinate - iXon detector [pixel] | Y coordinate - iXon detector [pixel] | Signal amplitude - Zyla detector [a.u.] | Frame no. - Zyla detector |
|---|---|---|---|---|
| 1946 | 246.0 | 253.0 | 9743 | 2 |
| 1759 | 233.0 | 277.0 | 9246 | 10 |
| 1193 | 97.0 | 346.0 | 8231 | 6 |
| 572 | 53.0 | 215.0 | 6577 | 7 |
| 395 | 102.0 | 231.0 | 6043 | 7 |

### Example 4 - adaptive time gating

A beam splitter (3) was placed directly behind the image intensifier (1). The light signal was in part reflected off the beam splitter (3) and in part transmitted. The reflected light was guided onto a focusing lens and a photomultiplier (this is the high temporal resolution detector (5)). Light transmitted through the beam splitter (3) was guided onto the imaging system and the sCMOS camera (this is the high spatial resolution detector (4)). The photomultiplier (5) and the image intensifier (1) were connected to the electronics (6) executing the algorithm of adaptive time gating.

In the single photon regime, the number of photons recorded on the frame of the sCMOS camera (4) is random. This is due to non-unit quantum efficiency of the photocathode and the examined process or, more generally, caused by the sole random nature of the examined process. The solution consisting of selection of frames meeting the appropriate conditions following the collection of data (the so-called post-selection) is a time-consuming and work-intensive process. It is also associated with a low efficiency of measurements, because only a small part of the entire course of experiment results in collection of data that meets the required criteria. The described system enables recording of frames with a predetermined number of events using the electronics (6) that executes the algorithm of adaptive gating of the image intensifier (1).

The solution is to open the image intensifier (1) simultaneously with the start of exposure of the sCMOS camera (4) array. The signal from the photomultiplier (5) characterized by a high temporal resolution enables the electronics (6) to count events. After a preset number of events are counted, the electronics (6) closes the image intensifier (1) until the end of the exposure time of the sCMOS camera (4) frame. In this way, the sCMOS camera (4), despite the long exposure time of the frame, records photons only for a short time necessary for the photomultiplier (5) to detect the preset number of events and the subsequent closing of the image intensifier (1). Therefore, all recorded frames contain the preset number of events. Elimination of frames with the number of events different than the preset one allows for significant shortening of time needed to carry out an experiment.

### Example 5 ― pulsed adaptive time gating

Modification of the embodiment presented as Example 4, utilising the possibility of fast pulsed time gating of the image intensifier (1) and the algorithm of pulsed adaptive time gating executed by the electronics (6). In this case, the photomultiplier (5) and the image intensifier (1) are also connected to the electronics (6) - executing the algorithm of pulsed adaptive time gating. The algorithm executing the gating opens the image intensifier (1) for a predetermined time, shorter than the frame exposure time of the sCMOS array, and then closes the image intensifier (1). If the number of events recorded by the photomultiplier (5) during the opening time of the image intensifier (1) does not exceed the preset number of events, the electronics (6) opens and closes, in pulsed mode, the image intensifier (1) for successive short time intervals until the preset number of events is reached.

In the described embodiment, the electronics (6), executing the algorithm of pulsed adaptive time gating, analyses the number of events recorded by the photomultiplier (5), each time only after the image intensifier (1) is closed. This allows us to identify and discard the dark counts detected during the time when the image intensifier (1) is closed. The gain of the image intensifier may also be modulated in time to provide a more favourable distribution of the signal amplitude and increase its dynamic range.

According to the present invention, the ability to control the image intensifier (1) by the electronics (6), for example such as described in Examples 4 and 5 above, can be used regardless of the electronics' (6) ability to perform the correlation analysis of signals recorded on the high temporal resolution detector (5) and on the high spatial resolution detector (4), for example such as described in Examples 2 and 3 above. In general: the electronics (6) may execute the algorithm of controlling the image intensifier as described in the present invention along with execution of the correlation analysis algorithm as described in the present invention or without it.

## Claims

1. A system for detection with high temporal and spatial resolution, comprising an image intensifier (1), at least one high spatial resolution detector (4), at least one high temporal resolution detector (5), and electronics (6), connected to these detectors (4, 5) and connected to the image intensifier (1), arranged and setup so that an optical signal amplified on the image intensifier (1) is subsequently recorded on the at least one high spatial resolution detector (4) and on the at least one high temporal resolution detector (5) **characterised in that** said electronics (6) executes an algorithm to control the system in such a way that it
either opens the image intensifier (1) simultaneously with the start of recording of the at least one light signal on the high temporal resolution detector (5) and on the at least one high spatial resolution detector (4), counts events on the at least one high temporal resolution detector (5), and closes the image intensifier (1) after a preset number of events is counted, or opens the image intensifier (1) for a predetermined time, shorter than the frame exposure time of the at least one high spatial resolution detector (4), counts events on the at least one high temporal resolution detector (5), then closes the image intensifier (1), and if the number of counted events during the opening time of the image intensifier (1) does not exceed the preset number of events - the electronics (6) opens and closes the image intensifier (1) for successive time intervals in pulsed mode, shorter than the frame exposure time of the at least one high spatial resolution detector (4) and counts the events on the at least one high temporal resolution detector (5) in these time intervals, until the preset total number of events is reached.

2. The system according to claim 1, wherein the electronics (6) executing the algorithm is setup and programmed to perform correlation of the signal from the at least one high spatial resolution detector (4) and the signal from the at least one high temporal resolution detector (5) based on an intensity function of these signals, in particular their amplitude and/or integral and/or FWHM and/or total energy and/or number of photons, preferably the electronics (6) executing the algorithm is setup and programmed to perform correlation of the strongest signal from the at least one high spatial resolution detector (4) with the strongest signal from the at least one high temporal resolution detector (5), and possibly also to sort signals from the at least one high spatial resolution detector (4) and the at least one high temporal resolution detector (5) in line with increasing or decreasing value of the intensity function of these signals.

3. The system according to any claim 1, wherein the at least one high spatial resolution detector (4) and the at least one high temporal resolution detector (5) are placed in the solid angle, into which the image intensifier (1) emits light.

4. The system according to any claim 1 to 3, wherein the at least one high spatial resolution detector (4) is provided behind a beam splitter (3), on one of its outputs, whereas the at least one high temporal resolution detector (5) is provided on another output of the beam splitter (3).

5. The system according to claim 3 or 4, wherein it comprises at least one auxiliary optics (2).

6. The system according to claim 5, wherein the auxiliary optics (2) is provided between the beam splitter (3) and the image intensifier (1) and/or between the beam splitter (3) and the at least one high spatial resolution detector (4) and/or between the beam splitter (3) and the at least one high temporal resolution detector (5).

7. A method for detection with high temporal and spatial resolution, using a system comprising an image intensifier (1), at least one high spatial resolution detector (4), at least one high temporal resolution detector (5), and electronics (6), connected to these detectors (4, 5) and connected to the image intensifier (1), arranged and setup so that an optical signal amplified on the image intensifier (1) is subsequently recorded on the at least one high spatial resolution detector (4) and on the at least one high temporal resolution detector (5) **characterised in that** the system is controlled by an algorithm executed by the electronics (6) in such a way that
either the image intensifier (1) is opened simultaneously with the start of recording of the at least one light signal on the high temporal resolution detector (5) and on the at least one high spatial resolution detector (4), events on the at least one high temporal resolution detector (5) are counted, and after a preset number of events is counted, the image intensifier (1) is closed,
or the image intensifier (1) is opened for a predetermined time, shorter than the frame exposure time of the at least one high spatial resolution detector (4), events on the at least one high temporal resolution detector (5) are counted, then the image intensifier (1) is closed, and if the number of counted events during the opening time of the image intensifier (1) does not exceed the preset number of events - the image intensifier (1) is opened and closed for successive time intervals in pulsed mode, shorter than the frame exposure time of the at least one high spatial resolution detector (4) and the events on the at least one high temporal resolution detector (5) in these time intervals are counted, until the preset total number of events is reached.

8. The method according to claim 7, wherein the signal from the at least one high spatial resolution detector (4) can be correlated with the signal from the at least one high temporal resolution detector (5) based on an intensity function of these signals, in particular their amplitude and/or integral and/or FWHM and/or total energy and/or number of photons, whereas preferably the strongest signal from the at least one high spatial resolution detector (4) is correlated with the strongest signal from the at least one high temporal resolution detector (5), and possibly also signals from the at least one high spatial resolution detector (4) and the at least one high temporal resolution detector (5) are sorted in line with increasing or decreasing value of the intensity function of these signals.

9. The method according to claim 7 or 8, wherein the optical signal amplified on the image intensifier (1) is imaged with the auxiliary optics (2) and/or split with a beam splitter (3), and subsequently recorded on the at least one high spatial resolution detector (4) and on the at least one high temporal resolution detector (5).

10. The method according to any claim 7 to 9, wherein the image intensifier (1) and/or the at least one high spatial resolution detector (4) and/or the at least one high temporal resolution detector (5) are time gated, and the gain of the image intensifier (1) optionally varies in time.

11. The method according to any claim 7 to 10, implemented in a system according to any claim 1 to 6.

## Patentansprüche

1. System zur Detektion mit hoher zeitlicher und räumlicher Auflösung, bestehend aus einem Bildverstärker (1), mindestens einem Detektor (4) mit hoher räumlicher Auflösung, mindestens einem Detektor (5) mit hoher zeitlicher Auflösung und einer Elektronik (6), die mit diesen Detektoren (4, 5) verbunden ist und mit dem Bildverstärker (1) verbunden ist, angeordnet und eingerichtet ist, so dass ein auf dem Bildverstärker (1) verstärktes optisches Signal anschließend auf dem mindestens einen Detektor (4) mit hoher räumlicher Auflösung und auf dem mindestens einen Detektor (5) mit hoher zeitlicher Auflösung aufgezeichnet wird,
**dadurch gekennzeichnet, dass** die Elektronik (6) einen Algorithmus ausführt, um das System so zu steuern, dass es entweder den Bildverstärker (1) gleichzeitig mit dem Beginn der Aufzeichnung des mindestens einen Lichtsignals auf dem Detektor (5) mit hoher zeitlicher Auflösung und auf dem mindestens einen Detektor (4) mit hoher räumlicher Auflösung öffnet, Ereignisse auf dem mindestens einen Detektor (5) mit hoher zeitlicher Auflösung zählt und den Bildverstärker (1) schließt, nachdem eine vorgegebene Anzahl von Ereignissen gezählt wurde,
oder den Bildverstärker (1) für eine vorgegebene Zeit öffnet, die kürzer ist als die Bildbelichtungszeit des mindestens einen Detektors (4) mit hoher räumlicher Auflösung, Ereignisse auf dem mindestens einen Detektor (5) mit hoher zeitlicher Auflösung zählt und dann den Bildverstärker (1) schließt, und wenn die Anzahl der gezählten Ereignisse während der Öffnungszeit des Bildverstärkers (1) die voreingestellte Anzahl von Ereignissen nicht überschreitet - öffnet und schließt die Elektronik (6) den Bildverstärker (1) für aufeinanderfolgende Zeitintervalle im gepulsten Modus, die kürzer als die Bildbelichtungszeit des mindestens einen Detektors (4) mit hoher räumlicher Auflösung sind, und zählt die Ereignisse auf dem mindestens einen Detektor (5) mit hoher zeitlicher Auflösung in diesen Zeitintervallen, bis die voreingestellte Gesamtzahl von Ereignissen erreicht ist.

2. System nach Anspruch 1, wobei die Elektronik (6), die den Algorithmus ausführt, so eingerichtet und programmiert ist, dass sie eine Korrelation des Signals von dem mindestens einen Detektor (4) mit hoher räumlicher Auflösung und des Signals von dem mindestens einen Detektor (5) mit hoher zeitlicher Auflösung auf der Grundlage einer Intensitätsfunktion dieser Signale, insbesondere ihrer Amplitude und/oder ihres Integrals und/oder ihrer FWHM und/oder ihrer Gesamtenergie und/oder ihrer Photonenanzahl, durchführt, vorzugsweise ist die Elektronik (6), die den Algorithmus ausführt, so eingerichtet und programmiert, dass sie eine Korrelation des stärksten Signals von dem mindestens einen Detektor (4) mit hoher räumlicher Auflösung mit dem stärksten Signal von dem mindestens einen Detektor (5) mit hoher zeitlicher Auflösung durchführt, und möglicherweise auch, dass sie die Signale von dem mindestens einen Detektor (4) mit hoher räumlicher Auflösung und dem mindestens einen Detektor (5) mit hoher zeitlicher Auflösung in Übereinstimmung mit einem zunehmenden oder abnehmenden Wert der Intensitätsfunktion dieser Signale sortiert.

3. System nach einem der Ansprüche 1, wobei der mindestens eine Detektor (4) mit hoher räumlicher Auflösung und der mindestens eine Detektor (5) mit hoher zeitlicher Auflösung in dem Raumwinkel angeordnet sind, in den der Bildverstärker (1) Licht aussendet.

4. System nach einem der Ansprüche 1 bis 3, wobei der mindestens eine Detektor (4) mit hoher räumlicher Auflösung hinter einem Strahlteiler (3) an einem seiner Ausgänge angeordnet ist, während der mindestens eine Detektor (5) mit hoher zeitlicher Auflösung an einem anderen Ausgang des Strahlteilers (3) angeordnet ist.

5. System nach Anspruch 3 oder 4, **dadurch gekennzeichnet, dass** es mindestens eine Hilfsoptik (2) umfasst.

6. System nach Anspruch 5, wobei die Hilfsoptik (2) zwischen dem Strahlenteiler (3) und dem Bildverstärker (1) und/oder zwischen dem Strahlenteiler (3) und dem mindestens einen Detektor (4) mit hoher räumlicher Auflösung und/oder zwischen dem Strahlenteiler (3) und dem mindestens einen Detektor (5) mit hoher zeitlicher Auflösung angeordnet ist.

7. System zur Detektion mit hoher zeitlicher und räumlicher Auflösung, bestehend aus einem Bildverstärker (1), mindestens einem Detektor (4) mit hoher räumlicher Auflösung, mindestens einem Detektor (5) mit hoher zeitlicher Auflösung und einer Elektronik (6), die mit diesen Detektoren (4, 5) verbunden ist und mit dem Bildverstärker (1) verbunden ist, angeordnet und eingerichtet ist, so dass ein auf dem Bildverstärker (1) verstärktes optisches Signal anschließend auf dem mindestens einen Detektor (4) mit hoher räumlicher Auflösung und auf dem mindestens einen Detektor (5) mit hoher zeitlicher Auflösung aufgezeichnet wird,
**dadurch gekennzeichnet, dass** das System durch einen von der Elektronik (6) ausgeführten Algorithmus so gesteuert wird, dass entweder der Bildverstärker (1) gleichzeitig mit dem Beginn der Aufzeichnung des mindestens einen Lichtsignals auf dem Detektor (5) mit hoher zeitlicher Auflösung und auf dem mindestens einen Detektor (4) mit hoher räumlicher Auflösung geöffnet wird, Ereignisse auf dem mindestens einen Detektor (5) mit hoher zeitlicher Auflösung gezählt werden, und nachdem eine vorgegebene Anzahl von Ereignissen gezählt wurde, 2 der Bildverstärker (1) geschlossen wird
oder der Bildverstärker (1) für eine vorgegebene Zeit geöffnet wird, die kürzer ist als die Bildbelichtungszeit des mindestens einen Detektors (4) mit hoher räumlicher Auflösung, Ereignisse auf dem mindestens einen Detektor (5) mit hoher zeitlicher Auflösung gezählt werden, dann der Bildverstärker (1) geschlossen wird, und wenn die Anzahl der gezählten Ereignisse während der Öffnungszeit des Bildverstärkers (1) die voreingestellte Anzahl von Ereignissen nicht überschreitet - der Bildverstärker (1) für aufeinanderfolgende Zeitintervalle im gepulsten Modus geöffnet und geschlossen wird, die kürzer sind als die Bildbelichtungszeit des mindestens einen Detektors (4) mit hoher räumlicher Auflösung, und die Ereignisse auf dem mindestens einen Detektor (5) mit hoher zeitlicher Auflösung in diesen Zeitintervallen gezählt werden, bis die voreingestellte Gesamtzahl der Ereignisse erreicht ist.

8. Verfahren nach Anspruch 7, wobei das Signal des mindestens einen Detektors (4) mit hoher räumlicher Auflösung mit dem Signal des mindestens einen Detektors (5) mit hoher zeitlicher Auflösung auf der Grundlage einer Intensitätsfunktion dieser Signale, insbesondere ihrer Amplitude und/oder ihres Integrals und/oder ihrer FWHM und/oder ihrer Gesamtenergie und/oder ihrer Photonenanzahl, korreliert werden kann, wobei vorzugsweise das stärkste Signal von dem mindestens einen Detektor (4) mit hoher räumlicher Auflösung mit dem stärksten Signal von dem mindestens einen Detektor (5) mit hoher zeitlicher Auflösung korreliert wird, und möglicherweise auch die Signale von dem mindestens einen Detektor (4) mit hoher räumlicher Auflösung und dem mindestens einen Detektor (5) mit hoher zeitlicher Auflösung entsprechend dem zunehmenden oder abnehmenden Wert der Intensitätsfunktion dieser Signale sortiert werden.

9. Verfahren nach Anspruch 7 oder 8, wobei das am Bildverstärker (1) verstärkte optische Signal mit der Hilfsoptik (2) abgebildet und/oder mit einem Strahlteiler (3) aufgeteilt und anschließend auf dem mindestens einen Detektor (4) mit hoher räumlicher Auflösung und auf dem mindestens einen Detektor (5) mit hoher zeitlicher Auflösung aufgezeichnet wird.

10. Verfahren nach einem der Ansprüche 7 bis 9, wobei der Bildverstärker (1) und/oder der mindestens eine Detektor (4) mit hoher räumlicher Auflösung und/oder der mindestens eine Detektor (5) mit hoher zeitlicher Auflösung zeitgesteuert sind und die Verstärkung des Bildverstärkers (1) optional zeitlich variiert.

11. Verfahren nach einem der Ansprüche 7 bis 10, implementiert in einem System nach einem der Ansprüche 1 bis 6.

## Revendications

1. Système de détection à haute résolution temporelle et spatiale, comprenant un amplificateur (1) d'image, au moins un détecteur (4) à haute résolution spatiale, au moins un détecteur (5) à haute résolution temporelle, et une électronique (6) reliée à ces détecteurs (4, 5) et reliée à l'amplificateur (1) d'image, agencées et configurées de telle sorte qu'un signal optique amplifié sur l'amplificateur (1) d'image est ensuite enregistré sur au moins un détecteur (4) à haute résolution spatiale et sur au moins un détecteur (5) à haute résolution temporelle,
**caractérisé en ce que** ladite électronique (6) exécute un algorithme pour commander le système de telle sorte qu'il ouvre l'amplificateur (1) d'image simultanément au début de l'enregistrement d'au moins un signal optique sur le détecteur (5) à haute résolution temporelle et sur au moins un détecteur (4) à haute résolution spatiale, compte les événements sur au moins un détecteur (5) à haute résolution temporelle, et ferme l'amplificateur (1) d'image après avoir compté un nombre prédéfini d'événements
ou ouvre l'amplificateur (1) d'image pendant un temps prédéterminé qui est plus court que le temps d'exposition de la trame d'au moins un détecteur (4) à haute résolution spatiale, compte les événements sur au moins un détecteur (5) à haute résolution temporelle, puis ferme l'amplificateur (1) d'image, et si le nombre d'événements comptés pendant le temps d'ouverture de l'amplificateur (1) d'image ne dépasse pas le nombre d'événements prédéfini - l'électronique (6) ouvre et ferme l'amplificateur (1) d'image pour des intervalles de temps successifs en mode pulsé, qui sont plus courts que le temps d'exposition de l'image d'au moins un détecteur (4) à haute résolution spatiale et compte les événements sur au moins un détecteur (5) à haute résolution temporelle dans ces intervalles de temps, jusqu'à ce qu'elle atteigne le nombre total d'événements prédéfini.

2. Système selon la revendication 1, dans lequel l'électronique (6) exécutant l'algorithme est configurée et programmée pour effectuer une corrélation du signal provenant d'au moins un détecteur (4) à haute résolution spatiale et du signal provenant d'au moins un détecteur (5) à haute résolution temporelle sur la base d'une fonction d'intensité de ces signaux, en particulier leur amplitude et/ou leur intégrale et/ou leur FWHM et/ou leur énergie totale et/ou leur nombre de photons, de préférence l'électronique (6) exécutant l'algorithme est configurée et programmée pour effectuer la corrélation du signal le plus fort provenant d'au moins un détecteur (4) à haute résolution spatiale avec le signal le plus fort provenant d'au moins un détecteur (5) à haute résolution temporelle, et éventuellement aussi pour trier les signaux provenant d'au moins un détecteur (4) à haute résolution spatiale et d'au moins un détecteur (5) à haute résolution temporelle en fonction de la valeur croissante ou décroissante de la fonction d'intensité de ces signaux.

3. Système selon l'une quelconque des revendications 1, dans lequel au moins un détecteur (4) à haute résolution spatiale et au moins un détecteur (5) à haute résolution temporelle sont placés dans l'angle fermé, dans lequel l'amplificateur (1) d'image émet de la lumière.

4. Système selon l'une quelconque des revendications 1 à 3, dans lequel au moins un détecteur (4) à haute résolution spatiale est prévu sur l'une de sorties derrière un diviseur (3) de faisceau, tandis que au moins un détecteur (5) à haute résolution temporelle est prévu sur une autre sortie du diviseur (3) de faisceau.

5. Système selon la revendication 3 ou 4, dans lequel il comprend au moins une optique auxiliaire (2).

6. Système selon la revendication 5, dans lequel l'optique auxiliaire (2) est prévue entre le diviseur (3) de faisceau et l'amplificateur (1) d'image et/ou entre le diviseur (3) de faisceau et au moins un détecteur (4) à haute résolution spatiale et/ou entre le diviseur (3) de faisceau et au moins un détecteur (5) à haute résolution temporelle.

7. Procédé de détection à haute résolution temporelle et spatiale, utilisant un système comprenant un amplificateur (1) d'image, au moins un détecteur (4) à haute résolution spatiale, au moins un détecteur (5) à haute résolution temporelle, et une électronique (6) connectée à ces détecteurs (4, 5) et connectée à l'amplificateur (1) d'image, agencées et configurées de sorte qu'un signal optique amplifié sur l'amplificateur (1) d'image est ensuite enregistré sur au moins un détecteur (4) à haute résolution spatiale et sur au moins un détecteur (5) à haute résolution temporelle,
**caractérisé en ce que** le système est commandé par un algorithme exécuté par l'électronique (6) de telle sorte que soit l'amplificateur (1) d'image est ouvert simultanément au début de l'enregistrement d'au moins un signal optique sur le détecteur (5) à haute résolution temporelle et sur au moins un détecteur (4) à haute résolution spatiale, les événements sur au moins un détecteur (5) à haute résolution temporelle sont comptés, et après avoir compté un nombre prédéfini d'événements, l'amplificateur (1) d'image est fermé,
soit l'amplificateur (1) d'image est ouvert pendant un temps prédéterminé que est plus court que le temps d'exposition de la trame d'au moins un détecteur (4) à haute résolution spatiale, les événements sur au moins un détecteur (5) à haute résolution temporelle sont comptés, puis l'amplificateur (1) d'image est fermé, et si le nombre d'événements comptés pendant le temps d'ouverture de l'amplificateur (1) d'image ne dépasse pas le nombre d'événements prédéterminé - l'amplificateur (1) d'image est ouvert et fermé pour des intervalles de temps successifs en mode pulsé, qui est plus courts que le temps d'exposition de trame d'au moins un détecteur (4) à haute résolution spatiale et les événements sur au moins un détecteur (5) à haute résolution temporelle dans ces intervalles de temps sont comptés, jusqu'à ce qu'elle atteigne le nombre total d'événements prédéfini.

8. Procédé selon la revendication 7, dans lequel le signal provenant d'au moins un détecteur (4) à haute résolution spatiale peut être corrélé avec le signal provenant d'au moins un détecteur (5) à haute résolution temporelle sur la base d'une fonction d'intensité de ces signaux, en particulier leur amplitude et/ou leur intégrale et/ou leur FWHM et/ou leur énergie totale et/ou leur nombre de photons, de préférence le signal le plus fort provenant d'au moins un détecteur (4) à haute résolution spatiale est corrélé avec le signal le plus fort provenant d'au moins un détecteur (5) à haute résolution temporelle, et éventuellement aussi pour trier les signaux provenant d'au moins un détecteur (4) à haute résolution spatiale et d'au moins un détecteur (5) à haute résolution temporelle en fonction de la valeur croissante ou décroissante de la fonction d'intensité de ces signaux.

9. Procédé selon la revendication 7 ou 8, dans lequel le signal optique amplifié sur l'amplificateur (1) d'image est imagé avec l'optique auxiliaire (2) et/ou divisé avec un diviseur (3) de faisceau, et ensuite enregistré sur au moins un détecteur (4) à haute résolution spatiale et sur au moins un détecteur (5) à haute résolution temporelle.

10. Procédé selon l'une quelconque des revendications 7 à 9, dans lequel l'amplificateur (1) d'image et/ou au moins un détecteur (4) à haute résolution spatiale et/ou au moins un détecteur (5) à haute résolution temporelle sont limités dans le temps, et le gain de l'amplificateur (1) d'image varie optionnellement dans le temps.

11. Procédé selon l'une quelconque des revendications 7 à 10, mis en œuvre dans un système selon l'une quelconque des revendications 1 à 6.
